# EUROPÄISCHE PATENTSCHRIFT

(11) **EP 0 763 710 B1**
(45) Veröffentlichungstag und Bekanntmachung des Hinweises auf die Patenterteilung: **14.05.2003**
(21) Anmeldenummer: 96113893.0
(22) Anmeldetag: 30.08.1996
(51) Int. Cl.: G01B 5/008, G01B 21/04

(54) **Kollisionsschutz für den Messarm eines Koordinatenmessgerätes**
Collision protective arrangement for the measuring arm of a coordinate measuring apparatus
Protection contre la collision pour le bras de mesure d'une machine de mesure de coordonnées

(30) Priorität: 16.09.1995 DE 29514892 U
(43) Veröffentlichungstag der Anmeldung: 19.03.1997
(73) Patentinhaber: Carl Zeiss, 89518 Heidenheim (Brenz) (DE); Carl-Zeiss-Stiftung, trading as Carl Zeiss, 89518 Heidenheim (Brenz) (DE)
(72) Erfinder: Brenner, Kurt, 74589 Satteldorf (DE); Seitz, Karl, 73447 Oberkochen (DE); Ähnelt, Peter, 73447 Oberkochen (DE); Roth, Roland, 73550 Waldstetten (DE); Dominicus, Walter, 89551 Königsbronn (DE)

(56) Entgegenhaltungen:
- EP-A- 0 215 233
- DE-A- 3 927 245
- DE-A- 4 238 139

## Beschreibung

Es ist bereits bekannt, den Meßarm eines Koordinatenmeßgerätes gegen Kollision mit dem Werkstück oder dem Bedienpersonal zu schützen. Derartige Schutzeinrichtungen sind beispielsweise in der DE 38 33 680 A1 sowie der DE 41 30 990 A1 beschrieben. Bei diesen bekannten Kollisionsschutzeinrichtungen wird der den Meßarm vollständig abdeckende Faltenbalg zur Aktivierung der Schutzeinrichtung eingesetzt. Er besitzt spezielle Ausnehmungen in seinen Stegen, durch die Lichtstrahlen oder elektrisch leitende Drähte geführt sind, die bei Unterbrechung bzw. Berührung mit dem Faltenbalg, nachdem dieser von einem Hindernis verschoben worden ist, ein Schaltsignal erzeugen, das die Bewegung der Maschine stoppt.

Diese bekannten Lösungen sind relativ aufwendig und setzen einen den Meßarm umgebenden Faltenbalg voraus, der jedoch nicht in jedem Falle vorhanden sein muß. Koordinatenmeßgeräte gibt es in einer Vielzahl verschiedener Bauformen und Typen, wobei der den Taster tragende Meßarm nicht zwangsläufig rein linear beweglich ist. Beispielsweise ist in der DE 42 38 139 A1 ein Koordinatenmeßgerät vom sogenannten Gelenkarmtyp beschrieben, bei dem der den Taster tragende Meßärm um zwei Achsen drehbar gelagert ist. Da sich bei diesem Gerätetyp die Auszugslänge des Meßarms nicht ändert, somit auch keine Führungen frei liegen, die gegen Verschmutzung zu schützen wären, besitzt das Gerät keinen Faltenbalg. Andererseits ist der Schwenkarm des Gerätes in Richtung der Schwenkachsen linear beweglich und wird in dieser Richtung den Auslenkungen des Tasters motorisch nachgeführt. Hierbei besteht die Gefahr, daß der Gelenkarm im Zuge der Nachführbewegung auf das zu vermessende Werkstück aufläuft und dabei beschädigt wird.

Die europäische Patentanmeldung EP 0 215 233 A2 zeigt einen Kollisionsschutz für die Pinole eines Meßgerätes. Der Kollisionsschutz umfaßt eine ringförmig ausgebildete Blende, die Pinole umgibt, und federnd nachgiebig gegenüber der Pinole gelagert ist. Die federnde Lagerung der Blende dient gleichzeitig als Schalter, der bei einer Kollision einen elektrischen Kontakt zwischen der ringförmigen Blende und der Pinole erzeugt. Dazu weist die federnde Lagerung eine erste und eine zweite Schraubenfeder auf, die seriell hintereinander angeordnet sind, und über einen Draht gegeneinander vorgespannt sind. An den sich zugewandten Enden sind die Federn an der Pinole fixiert. Am anderen Ende der ersten Feder ist die Blende befestigt, während am anderen Ende der zweiten Feder ein Schaltglied vorgesehen ist, das in seiner Ruhestellung von einem in der Pinole angebrachten Gegenkontakt beabstandet ist. Bei einer Kollision wird die Blende in Richtung der Pinole verschoben, so daß die erste Feder gestaucht wird und die zweite Feder das Schaltglied gegen den Gegenkontakt in der Pinole preßt und hierüber eine leitende Verbindung zwischen Blende und Pinole herstellt.

Es ist deshalb die Aufgabe der vorliegenden Erfindung einen möglichst einfach aufgebauten und preiswerten Kollisionsschutz für den Meßarm eines Koordinatenmeßgerätes zu schaffen, der keinen Faltenbalg benötigt. Der Kollisionsschutz soll insbesondere das vorstehend geschilderte Problem bei Koordinatenmeßgeräten vom Gelenkarmtyp auf möglichst einfache Weise lösen.

Diese Aufgabe wird mit den im Anspruch 1 genannten Maßnahmen gelöst.

Die erfindungsgemäße Lösung besitzt mehrere Vorteile. Zum einen wird nur ein relativ einfaches, preiswertes Teil benötigt das den Meßarm an der zu schützenden Stelle abdeckt, beispielsweise ein einfaches Metallblech, anstelle eines Faltenbalges. Dieses abdeckende Teil wirkt mit federnden Kontaktstiften zusammen, die ebenfalls preiswert konfektioniert erhältlich sind und sehr einfach elektrisch miteinander verschaltet, beispielsweise parallel geschaltet werden können, indem sie direkt in den aus leitendem Material bestehenden Meßarm eingesetzt werden. Diese Kontaktstifte besitzen einen großen Nachlaufweg, so daß genügend Zeit zur Verfügung steht, um die Antriebe abzuschalten und die Maschine abzubremsen, bevor das mit dem Meßarm kollidierende Teil Kräfte auf den Meßarm ausübt und diesen deformiert.

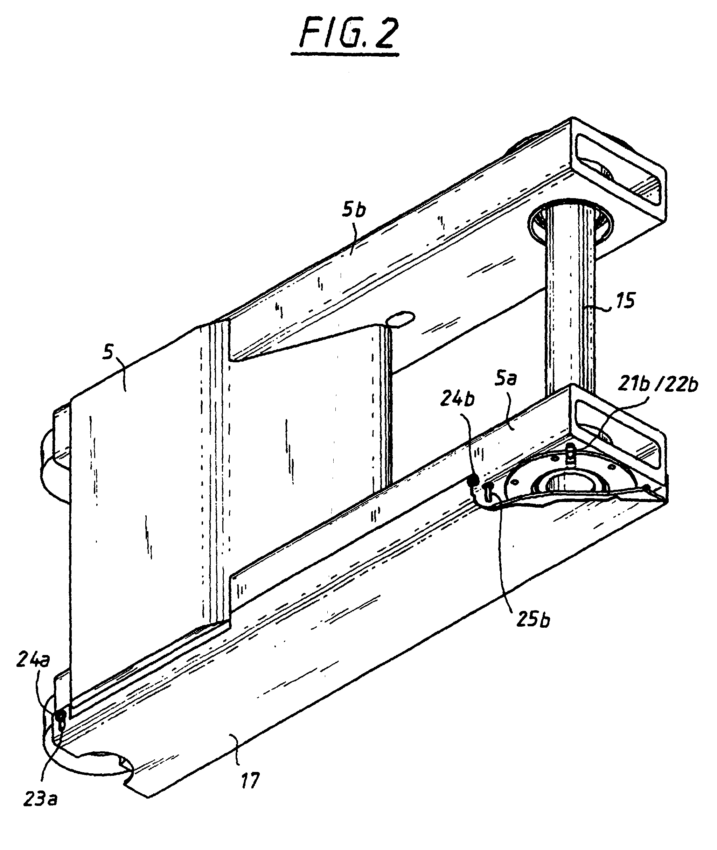

Weitere Vorteile der Erfindung ergeben sich aus der nachfolgenden Beschreibung eines Ausführungsbeispiels anhand der Figuren 1-3 der beigefügten Zeichnungen.
- Figur 1: ist eine vereinfachte perspektivische Darstellung, die den um zwei Achsen drehbaren Meßarm eines Koordinatenmeßgeräts vom Gelenkarmtyp zeigt; in
- Figur 2: ist der erste Schwenkarm des Meßarms aus Figur 1 in etwas vergrößertem Maßstabe unter einem etwas anderen Blickwinkel, nämlich auf die den Kollisionsschutz tragende Unterseite dargestellt;
- Figur 3: ist ein Schnitt durch den unteren Teil (5a) des ersten Schwenkarms (5) aus Figur 2.

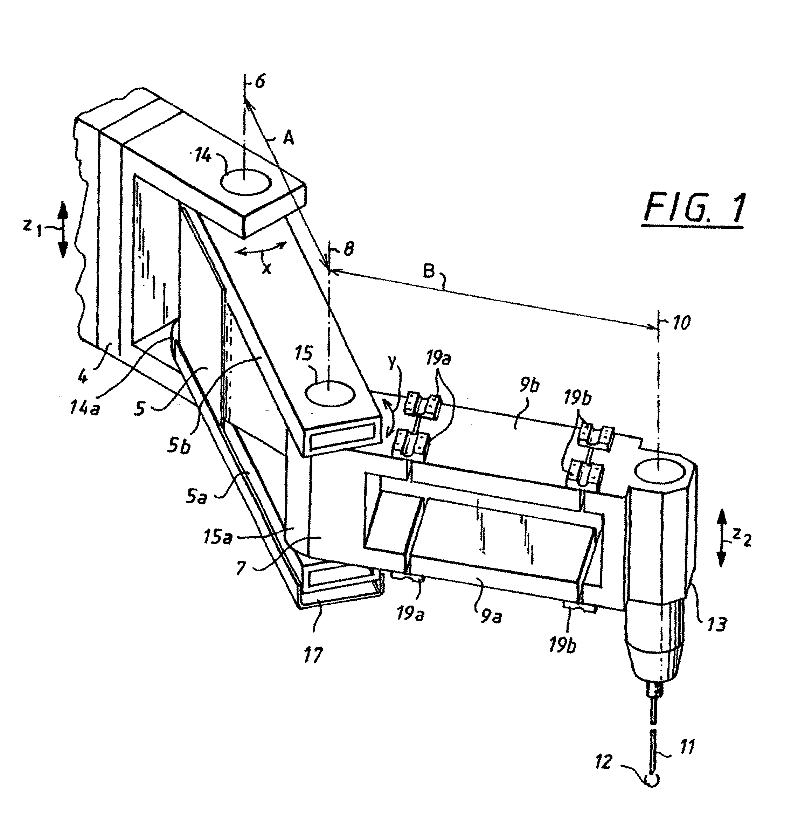

Bei der Beschreibung der Figur 1 gehen wir aus von einem Koordinatenmeßgerät des Typs wie es beispielsweise in der eingangs genannten US-PS 5 396 712 und der dazu korrespondierenden DE 42 38 139 A1 beschrieben ist, auf die an dieser Stelle voll inhaltlich Bezug genommen wird. Nicht dargestellt in der Figur 1 sind das Maschinenbett dieses Gerätes mit dem Werkstücktisch und der vertikalen z-Säule, an der ein gabelförmiger Träger (4) motorisch in Richtung des mit (Z1) bezeichneten Pfeils vertikal nachgeführt werden kann.

In die beiden Schenkel des Trägers (4) sind die Lager für eine die Schenkel verbindende Welle (14) eingesetzt, die eine erste vertikale Drehachse (6) definiert. Um diese Achse (6) läßt sich wie durch den Pfeil (X) angedeutet ein an der Welle (14) befestigter erster Arm (5) in der Waagerechten verschwenken. Das zur Erfassung der Schwenkbewegung erforderliche Winkelmeßsystem ist hier der Übersichtlichkeit halber nicht dargestellt. Der Schwenkarm (5) ist ebenfalls gabelförmig ausgebildet, wobei die Enden der Zinken (5a) und (5b) des gabelförmigen Schwenkarms wieder die Lager für eine zweite Welle (15) tragen. Diese Welle definiert die zweite Drehachse (8), die einen Abstand (A) zur ersten Drehachse (6) besitzt und zu dieser parallel ausgerichtet ist. Um die Achse (8) ist ein an der Welle (15) befestigter zweiter Schwenkarm wie durch den Pfeil (Y) veranschaulicht drehbar. Dieser zweite Schwenkarm besteht aus drei Teilen und ist in Form eines Federparallelogrammes ausgebildet, um den an seinem vorderen Ende angeordneten Träger (13) für den Taster des Gerätes manuell in der Vertikalen auslenken zu können, wie das durch den Pfeil (Z2) angedeutet ist. Der Taster trägt an seiner Unterseite einen nachgiebig gelagerten Taststift (11) mit Tastkugel (12).

Realisiert ist das Federparallelogramm durch zwei parallel angeordnete Schenkel (9a) und (9b), deren Enden durch je vier paarweise nebeneinander liegende Gelenkfedern (19a) und (19b) einmal mit der Ober- bzw. Unterseite des Trägers (13) und einmal mit dem Teil (7) verbunden sind, das zwischen den Schenkeln (5a) und (5b) des ersten Schwenkarms an der Welle (15) gelagert ist.

Mit dem vorstehend beschriebenen Koordinatenmeßgerät können Werkstücke vermessen werden, indem der Träger (13) manuell, d.h. von Hand bewegt und die Tastkugel (12) so auf die Oberfläche des zu vermessenden, hier nicht dargestellten Werkstücks aufgesetzt wird. Bei einer manuellen Auslenkung des Federparallelogramms (9a,b) in Richtung des Pfeils (Z2) spricht ein Sensor an, der dafür sorgt, daß der Träger (4) von einem ebenfalls nicht dargestellten Antrieb wie durch den Pfeil (Z1) symbolisiert der Auslenkbewegung nachgeführt wird.

Beim Messen mit diesem Gerät kann es nun geschehen, daß einer der beiden Schwenkarme mit seiner Unterseite im Zuge der genannten Nachführbewegung auf das zu vermessende Werkstück auffährt. Um diesen Kollisionsfall zu vermeiden, sind folgende Maßnahmen ergriffen worden:

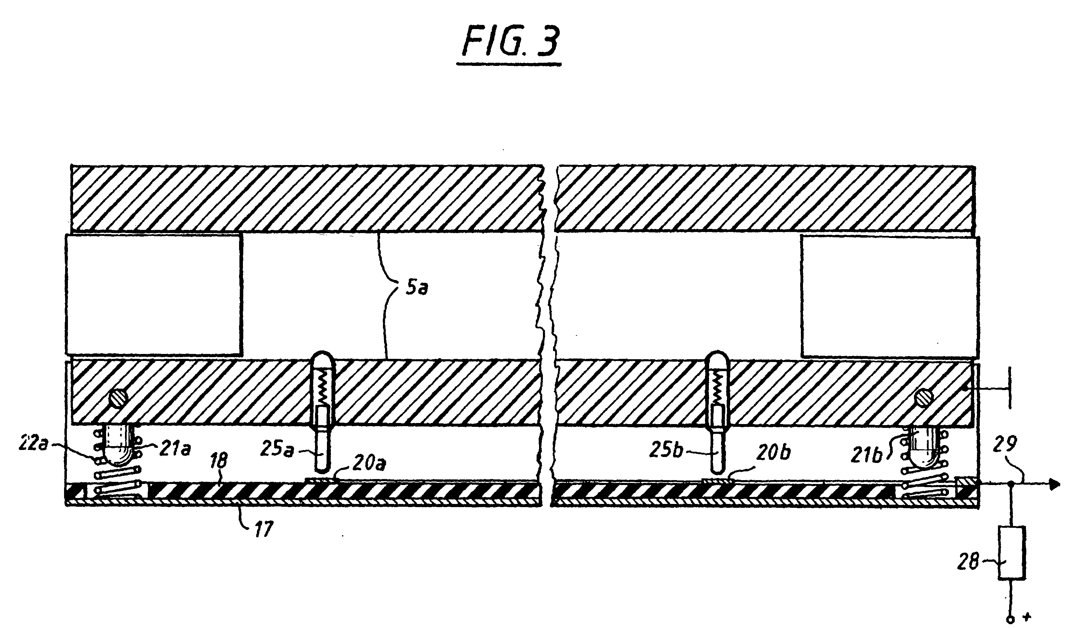

Die Unterseite des Zinken (5a) des gabelförmigen ersten Schwenkarms ist durch ein federnd gelagertes Blechteil (17) abgedeckt. Dieses Blechteil (17) ist mit seinen Längsseiten umgebogen und besitzt an jeder Seite zwei Langlöcher (23a,b), über die es an Schrauben (24a,b) am Teil (5a) in Richtung der Achsen (6,8) beweglich aufgehängt ist. Wie aus der detaillierteren Schnittzeichnung nach Figur 3 hervorgeht sind außerdem Druckfedern (22a,b) vorgesehen, die um Führungsbolzen (21a,b) an der Unterseite des Teils (5a) gelegt sind und das Abdeckblech (17) in der gezeichneten Stellung auf Abstand halten. Insgesamt sind vier solcher Federn vorgesehen.

Die Innenseite des Blechs (17) ist mit einer Leiterplatte (18) ausgelegt. Die Leiterplatte (18) trägt mehrere Gegenkontakte (20a,b), die den nachgebenden Stiften (25a,b) einer entsprechenden Anzahl von in das Teil (5a) eingesetzten metallischen Feder-Kontaktstiften gegenüberliegen. Derartige Kontaktstifte sind handelsüblich und können beispielsweise unter der Bezeichnung KS-96750 von der Firma Ingun bezogen werden. Sie bestehen aus einem zylindrischen metallischen Gehäuse, in die der ebenfalls metallische Stift gegen die Kraft einer in das Gehäuse eingelegten Feder über einen Weg typisch von 3 mm eingedrückt werden kann. Da das Teil (5a) aus CFK besteht und somit elektrisch leitend ist, sind auf diesem Wege die Kontaktstifte (25a,b) elektrisch parallel geschaltet. Ebenfalls parallel geschaltet sind die Gegenkontakte (20a,b) sowie die Gegenkontakte für weitere, in der Schnittzeichnung nach Figur 3 nicht dargestellte Kontaktstifte. Die Gegenkontakte (20a,b) sind über einen Vorwiderstand (28) auf Pluspotential gelegt und über die Leitung (29) mit der Kollisionsschutzschaltung für das Koordinatenmeßgerät verbunden, die den Antrieb für den Träger (4) abschaltet, wenn einer der Kontaktstifte (25a,b) dem Gegenkontakt berührt und ihn damit erdet.

In gleicher Weise, kann auch für eventuell noch zu schützende Teile (7) am zweiten Schwenkarm eine gleichartige Schutzeinrichtung vorgesehen werden.

Setzt nun der Schwenkarm (5) mit seiner Unterseite versehentlich auf das zu vermessende Werkstück auf, wird die Abdeckplatte (17) nach oben gedrückt, wobei dann einer der federnden Kontaktstifte (25) mit seiner Spitze den Gegenkontakt (20) berührt und das dabei entstehende Schaltsignal den Antrieb für die Nachführung des Trägers (4) abschaltet. In der kurzen Zeitverzögerung, bis der angetriebene Gelenkarm zum Stehen kommt, bewegt sich die Schutzabdeckung (17) zwar noch weiter, jedoch nur um etwa 0,3 mm. Hierbei geben die Kontaktstifte (25a,b) federnd nach, so daß keine übermäßigen zerstörenden Kräfte auf den Schwenkarm bzw. dessen Lagerungen ausgeübt werden.

## Patentansprüche

1. Koordinatenmeßgerät mit einem um eine oder mehrere Achsen (6,8) schwenkbar gelagerten Meßarm (5/7) zum Tragen eines Tasters, der in Richtung der Schwenkachsen (6,8) motorisch verschiebbar ist, **dadurch gekennzeichnet, daß** der Meßarm oder ein Teil (5) desselben mit einem Kollisionsschutz (17) versehen ist, der den Schwenkarm mindestens an der dem Meßobjekt zugewandten Seite (5b) schützt, wobei der Kollisioneschutz ein nachgiebig gelagertes, den Meßarm an der zu schützenden Stelle abdeckendes Teil (17) umfaßt; wobei das Teil (17) mit mehreren elektrisch verschalteten, federnden Kontaktstiften (25a,b) zusammenwirkt, die in den Meßarm (5a) eingesetzt sind und wobei das abdeckende Teil (17) die Gegenkontakte (20a,b) für die Kontakbatifte (25a,b) trägt.

2. Koordinatenmeßgerät nach Anspruch 1, wobei der Meßarm aus leitendem Material besteht.

3. Koordinatenmeßgerät nach Anspruch 2, wobei der Meßarm (5a) aus Kohlefaserverstärktem Kunststoff besteht.

4. Koordinatenmeßgerät nach einem der Ansprüche 1-3, wobei das abdeckende Teil (17) ein Metallblech ist.

## Claims

1. Coordinate measuring device with a measuring arm (5/7) for carrying a probe, which measuring arm is mounted pivotably about one or more axes (6, 8) and can be displaced by motor in the direction of the pivot axes (6, 8), **characterized in that** the measuring arm or part (5) of the same is provided with a collision guard (17), which protects the pivot arm at least on the side (5b) facing the object of measurement, the collision guard comprising a flexibly mounted part (17) covering the measuring arm at the location to be protected, the part (17) interacting with a number of electrically interconnected, resilient contact pins (25a,b), which are inserted in the measuring arm (5a), and the covering part (17) carrying the mating contacts (20a,b) for the contact pins (25a,b).

2. Coordinate measuring device according to Claim 1, the measuring arm consisting of conducting material.

3. Coordinate measuring device according to Claim 2, the measuring arm (5a) consisting of carbon-fibre-reinforced plastic.

4. Coordinate measuring device according to one of Claims 1-3, the covering part (17) being a metal sheet.

## Revendications

1. Machine de mesure de coordonnées avec un bras de mesure pour porter une sonde (5, 7) et pouvant pivoter autour d'un ou de plusieurs axes (6, 8), qui peut être déplacé par un moteur en direction des axes de pivotement (6, 8), **caractérisée en ce que** le bras de mesure ou une partie (5) de celui-ci est pourvu(e) d'une protection contre la collision (17), qui protège le bras pivotant au moins sur le côté (5b) tourné vers l'objet à mesurer, dans laquelle la protection contre la collision comprend une pièce (17) supportée souplement, recouvrant le bras de mesure à l'endroit à protéger, dans laquelle la pièce (17) coopère avec plusieurs broches de contact à ressort (25a, b), raccordées électriquement, qui sont posées dans le bras de mesure (5a) et dans laquelle la pièce de couverture (17) porte les contacts opposés (20a, b) pour les broches de contact (25a, b).

2. Machine de mesure de coordonnées suivant la revendication 1, **caractérisée en ce que** le bras de mesure est constitué d'une matière conductrice.

3. Machine de mesure de coordonnées suivant la revendication 2, **caractérisée en ce que** le bras de mesure (5a) est constitué de matière plastique renforcée de fibres de carbone.

4. Machine de mesure de coordonnées suivant l'une quelconque des revendications 1 à 3, **caractérisée en ce que** la pièce de couverture (17) est une tôle métallique.
